# EUROPÄISCHE PATENTSCHRIFT

(11) **EP 0 367 196 B1**
(45) Veröffentlichungstag und Bekanntmachung des Hinweises auf die Patenterteilung: **27.12.1995**
(21) Anmeldenummer: 89120125.3
(22) Anmeldetag: 30.10.1989
(51) Int. Cl.: F16C 29/06, B23Q 1/25

(54) **Linearführungs- und Antriebseinheit**
Linear guiding and driving unit
Unité de guidage et d'entraînement linéaire

(30) Priorität: 31.10.1988 DE 8813656 U; 04.09.1989 DE 8910548 U
(43) Veröffentlichungstag der Anmeldung: 09.05.1990
(73) Patentinhaber: Deutsche Star GmbH, 97424 Schweinfurt (DE)
(72) Erfinder: Barbat, Serge, F-77103 Meaux Cedex (FR); Greubel, Roland, D-8731 Ramsthal (DE); Keller, Bernhard, D-8722 Kaisten (DE)
(74) Vertreter: Weickmann, Heinrich, Dipl.-Ing.

(56) Entgegenhaltungen:
- EP-A- 0 106 826
- EP-A- 0 238 708
- DE-A- 3 527 886
- DE-A- 3 628 329
- DE-C- 431 040
- DE-U- 8 715 922
- FR-A- 2 304 439
- US-A- 1 835 328
- US-A- 3 439 581
- US-A- 3 670 583
- US-A- 4 478 462
- US-A- 4 573 747

## Beschreibung

Die Erfindung betrifft eine Linearführungs- und Antriebseinheit, umfassend eine Schienenführung mit mindestens einem Schienenstrang und einen auf der Schienenführung geführten und durch einen Linearantrieb angetriebenen Führungsschlitten, wobei der Führungsschlitten einstückig mit einem Antriebselementengehäuse des Linearantriebs und mit Halterungsmitteln für Rollführungsmittel hergestellt ist und wobei die Rollführungsmittel von lastübertragenden Tragkugelreihen mindestens zweier Kugelumläufe gebildet sind, welche Tragkugelreihen mit je einer schienenführungsseitigen Kugelrollbahn und einer schlittenseitigen Kugelrollbahn in Eingriff stehen.

Aus der EP-A-0 238 708 ist eine gattungsgemäße Linearführungs- und Antriebseinheit bekannt. Bei der bekannten Lösung sind die schlittenseitigen Kugelrollbahnen unmittelbar in das Material des Führungsschlittens eingeformt.

Eine gattungsfremde Linearführungs- und Antriebseinheit ist aus einem Prospekt "Star-Schienenführungstische" mit der Drucksachen-Nr. 120-0/1/88/6Bi bekannt. Bei dieser Linearführungs- und Antriebseinheit ist ein Führungsschlitten auf zwei zueinander parallelen Schienensträngen geführt, die auf einer gemeinsamen Grundplatte verlegt sind. Zur Führung des Führungsschlittens sind an diesem mehrere U-förmige Führungskörper durch Verschraubung befestigt, in denen die Kugelumläufe untergebracht sind. Zwischen den beiden Schienensträngen ist an dem Führungsschlitten ein zwischen die Schienenstränge hineinragendes Antriebselementengehäuse angeformt, in welchem eine Kugelmutter eingebaut ist. Die Kugelmutter steht in Eingriff mit einer Gewindespindel, die sich zwischen den beiden Schienensträngen von dem einen zum anderen Ende der Grundplatte erstreckt. Die Gewindespindel ist an Traversen an den Enden der Grundplatte drehbar gelagert und kann mit einem Drehantrieb verbunden werden.

Nachteilig bei dieser bekannten Ausführungsform ist, daß die Führungskörper für die Kugelumläufe von gesonderten Teilen gebildet sind, welche an dem Schlitten durch Schrauben befestigt werden müssen.

Des weiteren ist aus einer Vorveröffentlichung aus einem Prospekt "FESTO-Pneumatik" eine gattungsfremde Linearführungs- und Antriebseinheit bekannt, bei der ein U-förmiger Führungsschlitten auf dem Schienenstrang durch Rollen geführt ist, welche an dem Führungsschlitten drehbar gelagert sind.

Der Erfindung liegt, ausgehend von dem Stand der Technik nach der EP-A-0 238 708, die Aufgabe zugrunde, eine Linearführungs- und Antriebseinheit herzustellen, die ohne Rücksicht auf den Werkstoff des Führungsschlittens eine hohe Verschleißbeständigkeit besitzt.

Zur Lösung dieser Aufgabe wird vorgeschlagen, daß in den Halterungsmitteln mindestens eine Ausnehmung für die Aufnahme einer einstückigen Mehrfachstahleinlage ausgebildet ist, welche Mehrfachstahleinlage die schlittenseitigen Kugelrollbahnen zweier Kugelumläufe aufweist.

Die erfindungsgemäße Linearführungs- und Antriebseinheit ist kompakt und ist einfach und wirtschaftlich herstellbar, da der Schlitten mit den Halterungsmitteln und dem Antriebselementengehäuse einstückig ausgeführt ist und deshalb eine nachträgliche Justierung und Befestigung der Halterungsmittel nicht erforderlich ist.

Bei der Wahl des Werkstoffes für den Schlitten ist man weitgehend ungebunden, da die Kugelrollbahnen an Stahleinlagen angeformt sind, welche die notwendige Verschleißfestigkeit bieten. Diese Stahleinlagen können notfalls ausgetauscht werden, so dass der Schlitten eine lange Standzeit besitzt, auch wenn die dem größten Verschleiß ausgesetzten Stahleinlagen vorzeitig unbrauchbar werden sollten.

Der Führungsschlitten lässt sich zusammen mit dem Antriebselementengehäuse und den Halterungsmitteln von einem Strangpressprofil bilden, so dass die Herstellung noch weiter vereinfacht wird. Bei der Herstellung dieses Strangpressprofils können die Ausnehmungen in den Halterungsmitteln und in dem Antriebselementengehäuse bereits weitgehend im Zuge des Extrudierens hergestellt werden, so dass eine spanabhebende Bearbeitung nur noch in geringem Umfang notwendig ist.

Da die schlittenseitigen Kugelrollbahnen auf den Stahleinlagen ausgebildet sind, kann der Führungsschlitten, wenn es die zu erwartenden Belastungen erlauben, beispielsweise aus Aluminium hergestellt werden, ohne dass mit vorzeitigem Verschleiß zu rechnen ist.

Die Antriebseinrichtung kann in weiten Grenzen variiert werden, insbesondere können Riementriebe, Spindeltriebe und pneumatische oder hydraulische Zylinderkolbenaggregate zum Antrieb verwendet werden. Der Antrieb kann ein Gewindetrieb sein, bei dem das Antriebselementengehäuse eine Mutter des Gewindetriebs aufnimmt und die zugehörige Gewindespindel achsparallel zu dem Schienenstrang in Traversen drehbar gelagert ist, welche im Bereich der Enden des Schienenstrangs mit diesem verbunden sind. Bevorzugte Antriebe sind Kugelgewindetriebe, bei denen die Kugelmutter über in einer geschlossenen Bahn innerhalb der Kugelmutter geführte Kugeln in gewindeartigem Eingriff mit der Gewindespindel steht.

Eine andere ebenfalls vorteilhafte Antriebsart beruht darauf, dass das Antriebselementengehäuse mit einem Trum eines Riementriebs verbunden ist, welcher sich parallel zur Längsachse des Schienenstrangs zwischen zwei Traversen erstreckt, die in den Endbereichen des Schienenstrangs angeordnet sind. Dabei können die beiden Trumme des Riementriebs durch einen Durchgang des Antriebselementengehäuses hindurchgeführt sein, wobei das eine Trum des Riementriebs innerhalb des Durchgangs mit dem Antriebselementengehäuse fest verbunden ist, während das andere Trum frei durch den Durchgang hindurchläuft.

Die Linearführungs- und Antriebseinheit wird bevorzugt in der Weise ausgebildet, daß die Halterungsmittel, wie aus dem oben erwähnten Prospekt "Star-Schienenführungstische" grundsätzlich bekannt, einen Schienenstrang U-förmig umschließen und daß zwischen nach Art von U-Schenkeln einander zugeordneten Schenkeln der Halterungsmittel und den diesen Schenkeln benachbarten Seitenflächen des Schienenstrangs je zwei Tragkugelreihen von je zwei Kugelumläufen angeordnet sind.

Auch die Lage der Antriebseinrichtung zum Schienenstrang ist in weiten Grenzen variierbar. Es kann eine Ausführungsform gewählt werden, bei der das Antriebselementengehäuse seitlich neben einem Schenkel der Halterungsmittel angeordnet ist. Eine solche Ausführungsform ist insbesondere dann von Interesse, wenn eine geringe Bauhöhe der Linearführungs- und Antriebseinheit über einer den Schienenstrang tragenden Trägerfläche gefordert ist. Dabei ist eine weitere Reduzierung der Bauhöhe dadurch möglich, daß die Antriebseinrichtung im Höhenbereich des Führungsschlittens untergebracht wird.

Es ist jedoch auch eine Ausführungsform denkbar, bei der das Antriebselementengehäuse über einem Stegbereich der Halterungsmittel angeordnet ist. Dies kann im Hinblick auf eine möglichst schmale Bauweise der Linearführungs- und Antriebseinheit günstig sein.

Der Führungsschlitten kann die verschiedensten Funktionsgeräte tragen, beispielsweise Funktionsgeräte einer Werkzeugmaschine. Aus diesem Grunde wird vorgeschlagen, daß der Führungsschlitten mit einer Aufspannfläche und Aufspannmitteln zum Aufbau eines Ansatzteils ausgebildet ist.

Um Fluchtungsfehler ausgleichen zu können, können die Mehrfach-Stahleinlagen in den Halterungsmitteln um eine zur Längsachse des Schienenstrangs senkrechte Achse schaukelfähig gelagert sein, wobei diese Schaukelachse im Bereich der Längsmitte der jeweiligen Tragkugelkreihen liegt.

Die einer gemeinsamen Mehrfach-Stahleinlage zugehörigen Tragkugelreihen können in den zugehörigen Kugelrollbahnen der gemeinsamen Mehrfach-Stahleinlage durch eine gemeinsame Haltestegeinheit gesichert sein. Diese Haltestegeinheit kann dabei gleichzeitig mit der Sicherung der Kugeln an der Mehrfach-Stahleinlage auch die Sicherung der Mehrfach-Stahleinlage in den Halterungsmitteln übernehmen. Die Haltestegeinheit kann Teil mindestens einer an den Halterungsmitteln befestigten Endplatte sein, in welcher Umlenkführungen für die jeweiligen Kugelumläufe ausgebildet sind.

Die Haltestegeinheiten sind jeweils so ausgebildet, daß sie ein Schaukeln der Stahleinlagen um eine Achse senkrecht zur Schienenstrangachse und/oder um eine Achse parallel zur Schienenstrangachse zulassen. Dazu empfiehlt es sich, daß bei hartelastischem Haltestegmaterial die Stahleinlagen mit einem gewissen Bewegungsspiel von den Haltestegeinheiten gehalten werden. Bei weichelastischem Haltestegmaterial könnte die Schaukelfähigkeit auch durch die elastische Verformbarkeit des Haltestegmaterials ermöglicht werden.

Es kann auch vorteilhaft sein, die Mehrfach-Stahleinlage um eine zur Längsachse des Schienenstrangs parallele Achse schaukelfähig zu lagern. Des weiteren kann die zur Aufnahme der Mehrfach-Stahleinlage bestimmte Ausnehmung in einem zur Achse eines Schienenstrangs orthogonal gelegten Querschnitt keilförmig ausgebildet sein und die Mehrfach-Stahleinlage entsprechend keilförmig ausgebildet sein.

Die Linearführungs- und Antriebseinheit kann in der Weise ausgestaltet sein, daß an zwei beidseits einer Längssymmetrieebene eines Schienenstrangs gelegenen Seitenflächen des Schienenstrangs je zwei schienenstrangseitige Kugelrollbahnen in symmetrischer Anordnung beidseits der Symmetrieebene angeordnet sind und daß dementsprechend in den Halterungsmitteln Ausnehmungen für je eine Mehrfachstahleinlage beidseits der Symmetrieebene vorgesehen sind.

Ferner kann es vorteilhaft sein, wenn die schienenstrangseitigen Kugelrollbahnen von den Flanken einer Längsnut in einer Seitenfläche des Schienenstrangs gebildet sind.

In weiterer Ausgestaltung der Erfindung wird vorgeschlagen, daß die Schienenführung einen einzigen Schienenstrang mit einer Längsachse und einer diese Längsachse enthaltenden Längssymmetrieebene umfaßt, daß auf dem Schienenstrang ein Führungsschlitten symmetrisch zur Längssymmetrieebene angeordnet und durch zur Längssymmetrieebene symmetrische Rollführungsmittel geführt ist, daß an den Enden des Schienenstrangs Traversen angeordnet sind und daß eine einzige zwischen den Traversen sich erstreckende Antriebseinrichtung mit einem parallel zur Richtung der Längsachse beweglichen Antriebselement vorgesehen ist, welches außerhalb der Längsachse in Mitnahmeverbindung mit dem Führungsschlitten steht, wobei der Schienenstrang beidseits der Längssymmetrieebene mit je zwei in einer Richtung senkrecht zur Längsachse und parallel zur Längssymmetrieebene beabstandeten Kugelrollbahnen für jeweils eine Tragkugelreihe von je zwei beidseits der Längssymmetrieebene angeordneten Kugelumläufen des Führungsschlittens ausgeführt ist und wobei die den Tragkugelreihen auf einer Seite der Symmetrieebene zugeordneten Kraftübertragungsebenen zu der Längssymmetrieebene hin divergierend mit der Längssymmetrieebene jeweils einen Winkel von 30° bis 60°, vorzugsweise ca. 45°, einschließen.

Eine derartige Kugelführung des Führungsschlittens auf dem Schienenstrang ist aus der DE-A-35 27 886 bekannt.

Es hat sich gezeigt, daß durch die Anwendung einer solchen Kugelführung des Führungsschlittens auf dem Schienenstrang besondere Vorteile hinsichtlich der Führungsqualität dann zu erreichen sind, wenn die Kraftresultierende der Antriebseinrichtung außerhalb der Längsachse des Schienenstrangs liegt und deshalb mit erhöhten Kippmomenten auf die Schlittenführung zu rechnen ist. Es können dann ohne Beeinträchtigung der Führungsqualität größere Antriebskräfte übertragen und die unvermeidlicherweise in der Führung auftretenden Kippmomente unschädlich gemacht werden.

Wie schon aus der oben genannten DE-A-35 27 886 bekannt, kann der Führungsschlitten dabei in einem zur Längsachse senkrechten Querschnitt betrachtet in im wesentlichen U-förmiger Zuordnung mit einem Stegteil und zwei Schenkelteilen ausgeführt sein, wobei an den Schenkelteilen jeweils zwei Kugelumläufe angeordnet sind.

Die Lage der Antriebseinrichtung zum Schienenstrang ist in weiten Grenzen variierbar. Häufig wird man eine Ausführungsform wählen, bei der die Antriebseinrichtung in Abstand von der Längssymmetrieebene seitlich eines Schenkelteils des Führungsschlittens angeordnet ist.

Im Hinblick auf eine möglichst schmale Bauweise der Linearführungs- und Antriebseinheit ist es auch möglich, daß die Antriebseinrichtung im Bereich der Längssymmetrieebene über dem Stegteil des Führungsschlittens angeordnet ist.

Diese Bauweise kann etwa so ausgeführt sein, daß sich zwischen den beiden Traversen eine drehbare Gewindespindel erstreckt und daß auf dem Stegteil des Führungsschlittens eine Fassung für eine Kugelmutter angebracht ist, welche über in einer geschlossenen Bahn innerhalb der Kugelmutter geführte Kugeln in gewindeartigem Eingriff mit der Gewindespindel steht. Dabei kann die Kugelmutter in einer Einsenkung einer zur Längsachse normalen Endfläche der Fassung eingelassen sein.

Auch bei der Anordnung des Antriebs oberhalb des Stegteils ist es wieder möglich, daß sich zwischen den beiden Traversen eine Schleife eines flexiblen Antriebsmittels in Form einer Kette eines Zahnriemens oder dgl. erstreckt und daß ein Trum dieser Schleife mit dem Stegteil des Führungsschlittens verbunden ist. Die Verbindung der Schleife mit dem Führungsschlitten kann dabei in der Weise vorgenommen werden, daß auf dem Stegteil des Führungsschlittens ein Führungs- und Befestigungsklotz für die Schleife angeordnet ist, welcher eine Klemmfläche zum Festlegen des einen Schleifentrums an dem Stegteil und einen Tunnel für den Durchgang des anderen Schleifentrums aufweist.

Bei Anordnung des Antriebs oberhalb des Stegs kann man auch das rücklaufende Trum der Schleife unterhalb des Schienenstrangs zurückführen, etwa in einer Bodenausnehmung einer den Schienenstrang tragenden Grundplatte. Auf diese Weise erreicht man, daß das anzutreibende Objekt möglichst nahe an die Längsachse des Schienenstrangs heranrückt; gleichzeitig kann man die ganze Höhe des Schienenstrangs und ggf. der Grundplatte für die Unterbringung der Umlenkrollen der Schleife ausnützen. Man erhält auf diese Weise eine besonders kompakte Ausführungsform mit weitgehender Kapselung der Schleife.

Durch die Linearführungs- und Antriebseinheit ist häufig ein Teil anzutreiben, das etwa einer Werkzeugmaschine oder einem Handhabungsautomaten zugehört. Um die Verbindung dieses Teils mit dem Führungsschlitten herzustellen, kann man vorsehen, daß auf der Fassung bzw. auf dem Führungs- und Befestigungsklotz Befestigungsmittel zur Verbindung mit einem anzutreibenden Teil angebracht sind. Dabei können die Befestigungsmittel Paßflächen zur formschlüssigen, justierenden Anlage des anzutreibenden Teils aufweisen.

Um Verspannungen in der Linearführungs- und Antriebseinheit zu vermeiden, ist es erwünscht, die Antriebseinrichtung in ihrer Lage zu dem Schienenstrang möglichst exakt zu justieren. Dies kann dadurch erreicht werden, daß die Endtraversen auf Endabschnitten der Kugelrollbahnen des Schienenstrangs justiert sind. Dabei empfiehlt es sich, daß die Endtraversen auf dem Schienenstrang vermittels den Schienenstrang durchsetzender Befestigungsschrauben befestigt sind. Solche Befestigungsschrauben sichern die Endtraversen auf dem Schienenstrang ohne irgendwelche Verformung der Endtraversen, so daß die Lage der Antriebseinrichtung unabhängig ist von den Anzugskräften, die beim Anbringen der Befestigungsschrauben aufgebracht werden.

Es sei an dieser Stelle noch bemerkt, daß die genaue Lagezuordnung der Antriebseinrichtung zu dem Schienenstrang besonders bedeutsam dann ist, wenn als Antriebseinrichtung ein Spindeltrieb, etwa ein Kugelspindeltrieb, angewandt wird.

Um einen leichten Einbau der Linearführungs- und Antriebseinheit in einer größeren Baugruppe, etwa einer Werkzeugmaschine oder einem Handhabungsgerät zu ermöglichen, wird vorgeschlagen, daß der Schienenstrang eine Auflagefläche zur Auflage auf einem Träger und senkrecht zu dieser Auflagefläche verlaufende Befestigungsbohrungen zur Aufnahme von den Schienenstrang auf dem Träger haltenden Befestigungsbolzen aufweist.

Um dabei eine Berührung der Endtraversen und des Führungsschlittens mit der Auflagefläche zu vermeiden, auch wenn die Auflagefläche breiter ist als der Schienenstrang, wird vorgeschlagen, daß die Endtraversen und/oder der Führungsschlitten gegenüber der Auflagefläche zurückgesetzt sind.

Die beiliegenden Figuren erläutern die Erfindung anhand von Ausführungsbeispielen; es stellen dar:
- Figur 1: einen Querschnitt durch eine erfindungsgemäß ausgestaltbare Linearführungs- und Antriebseinheit mit Kugelspindelantrieb im Bereich des Führungsschlittens, wobei der Kugelspindelantrieb seitlich der Führungsschiene angeordnet ist;
- Figur 2: einen Schnitt nach Linie II-II der Figur 1;
- Figur 3: einen Schnitt durch eine Endtraverse nach Linie III-III der Figur 2, wobei die Endtraverse von dem Schienenstrang abgenommen ist;
- Figur 4: einen Längsschnitt durch eine weitere erfindungsgemäß ausgestaltbare Ausführungsform, bei welcher ein Kugelspindelantrieb in der Längsmittelebene des Schienenstrangs auf der Oberseite des Führungsschlittens angeordnet ist;
- Figur 5: einen Querschnitt entsprechend demjenigen nach Figur 1, wobei jedoch der Kugelspindelantrieb durch einen Riemenantrieb ersetzt ist;
- Figur 6: einen Längsschnitt entsprechend demjenigen der Figur 4, wobei jedoch der Kugelspindelantrieb durch einen Riemenantrieb ersetzt ist;
- Figur 7: eine Abwandlung zur Ausführungsform nach Figur 6, jedoch im Querschnitt gesehen;
- Figur 8: einen Querschnitt durch eine erfindungsgemäße Ausführungsform, bei der ein Antriebselementengehäuse einstückig mit dem Schlitten ausgeführt ist und eine Mehrfach Stahleinlage für schlittenseitige Kugelrollbahnen der Kugelumläufe vorgesehen ist, wobei ein Kugelgewindetrieb zum Antrieb dient;
- Figur 9: eine erfindungsgemäße Ausführungsform, bei welcher als Antriebsmittel ein Riementrieb vorgesehen ist;
- Figur 10: eine Endansicht einer Stahleinlage 521 gemäß Figur 8;
- Figur 11: einen Schnitt nach Linie XI-XI der Figur 10;
- Figur 12: eine abgewandelte Ausführungsform der Stahleinlage entsprechend der Ansicht gemäß Figur 10.

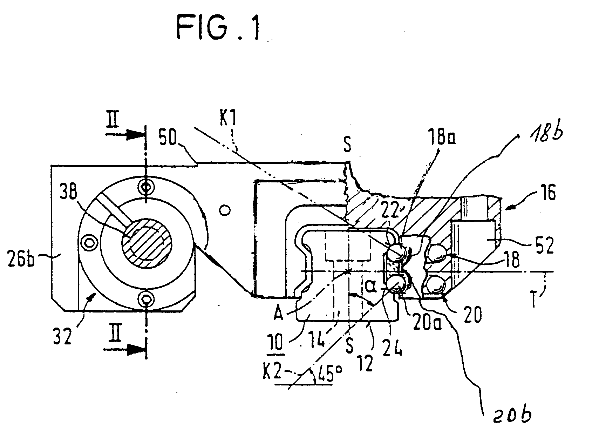

In Figur 1 ist ein Schienenstrang mit 10 bezeichnet. Dieser Schienenstrang ist von einer einzigen, einstückigen Profilschiene gebildet, welche eine Auflagefläche 12 zur Auflage auf einer Trägerfläche aufweist und auf dieser Trägerfläche vermittels Bolzen befestigt werden kann, welche Bohrungen 14 des Schienenstrangs 10 durchsetzen. Auf dem Schienenstrang 10 ist ein Führungsschlitten 16 geführt. Im Führungsschlitten 16 sind beidseits einer Längssymmetrieebene S-S je zwei Kugelumläufe 18 und 20 untergebracht. Die tragenden Kugelreihen 18a und 20a dieser Kugelumläufe 18, 20 liegen an je einer Kugelrollbahn 22 bzw. 24 des Schienenstrangs 10 und ferner an in Fig. 1 nur schematisch dargestellten Kugelrollbahnen 18b und 20b des Führungsschlittens 16 an. Das für die Anordnung der Kugelumläufe 18 und 20 Gesagte gilt auch für weitere Kugelumläufe , die auf der anderen Seite untergebracht sind, und zwar symmetrisch zu der dargestellten Anordnung.

Die Achse des Schienenstrangs 10 ist mit A bezeichnet. Durch die Achse A geht eine zur Längssymmetrieebene S-S orthogonale Ebene T. Die Kraftübertragungsebenen der tragenden Kugelreihen 18a und 20a sind mit K1 und K2 bezeichnet. Diese Kraftübertragungsebenen schließen mit der Längssymmetrieebene einen Winkel α ein, der im Beispielsfall ca. 45° beträgt und zwischen etwa 30° und etwa 60° variieren kann. Wegen näherer Einzelheiten der Kugelumläufe 18 und 20 wird auf die DE-A-35 27 886 verwiesen.

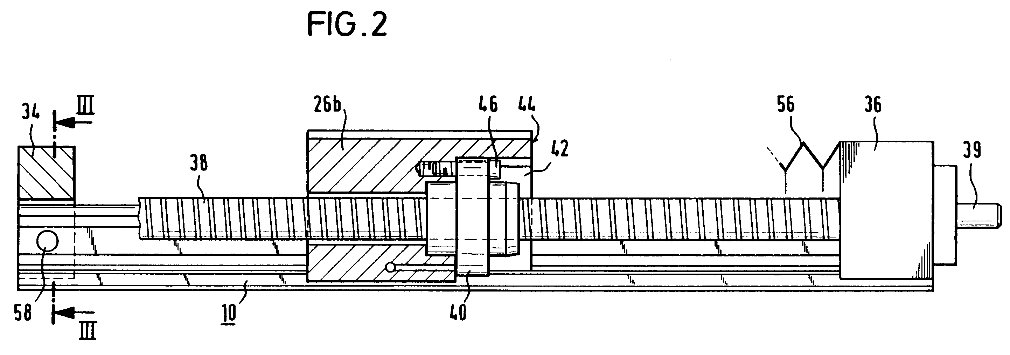

In einem Teil 26b des Führungsschlittens 16 ist die Verbindung des Führungsschlittens 16 mit einer Antriebseinrichtung, nämlich einem Kugelgewindeantrieb 32 hergestellt, zu dessen Erläuterung nun zusätzlich auf die Figur 2 verwiesen wird. In Figur 2 erkennt man, daß an den Enden des Schienenstrangs 10 je eine Endtraverse 34, 36 angebracht ist. In diesen Endtraversen 34, 36 ist eine Gewindespindel 38 drehbar und axial unbeweglich gelagert, deren eines Ende 39 zur Verbindung mit einem Antriebsmotor, beispielsweise einen Schrittmotor, ausgebildet ist. Diese Gewindespindel 38 steht im Eingriff mit einer Kugelmutter 40, welche in einer Ausnehmung 42 einer Endfläche 44 des Teils 26b untergebracht und dort mittels Bolzen 46 festgesetzt ist. Zum Aufbau des aus der Gewindespindel 38 und der Kugelmutter 40 bestehenden Kugelgewindeantriebs wird auf die folgenden Veröffentlichungen verwiesen:
DE-PS 28 05 141,
DE-PS 28 34 299,
DE-PS 29 14 756.

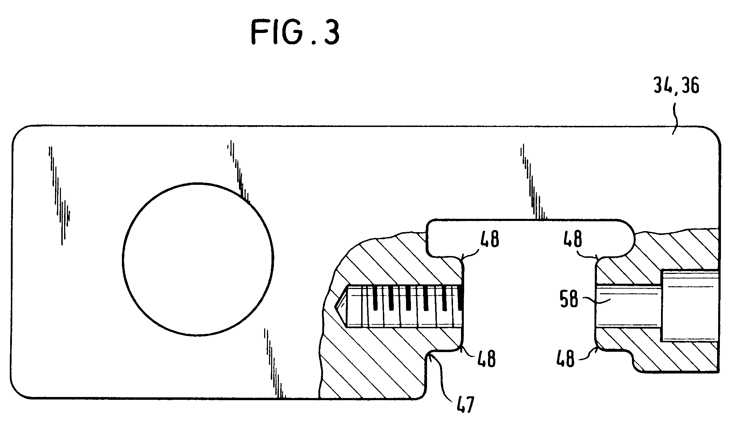

Zur Anordnung der Traversen 34, 36 auf dem Schienenstrang 10 wird nun auf die Figur 3 verwiesen. Diese Traversen 34, 36 weisen einen Profilausschnitt 47 auf, mit Eingriffsrundungen 48, die zum Eingriff in die Kugelrollbahnen 22, 24 bestimmt sind. Damit ist die Gewindespindel 38 gegenüber dem Schienenstrang 10 exakt positioniert.

Auf dem Führungsschlitten kann ein anzutreibender Teil befestigt werden. Dieser wird auf dem Schlitten 16 aufgelegt und durch Justierkanten 50 justiert. Zur Befestigung dienen Bolzen, welche Bohrungen 52 im Führungsschlitten 16 durchsetzen.

In Figur 2 erkennt man einen Abdeckungsbalg 56, der sich zwischen den beiden Traversen 34, 36 und dem Führungsschlitten 16 erstreckt, so daß eine Verschmutzung der Gewindespindel 38 und des Schienenstrangs 10 vermieden ist.

Die Befestigung der Traversen 34, 36 auf dem Schienenstrang 10 erfolgt durch Bolzen, welche in Bohrungen 58 der Traversen eingeschraubt werden und zugehörige Bohrungen des Schienenstrangs 10 durchsetzen.

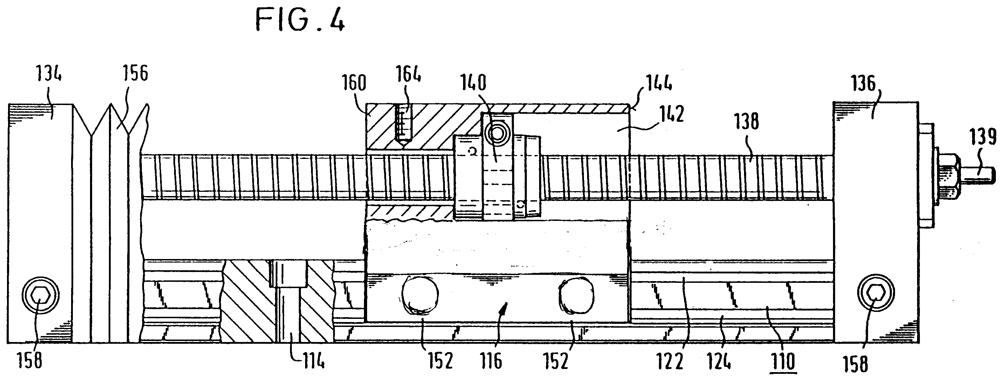

In Figur 4 sind analoge Teile mit gleichen Bezugszeichen versehen wie in den Figuren 1 bis 3, jeweils vermehrt um die Zahl 100.

Die Gewindespindel 138 liegt hier über dem Führungsschlitten 116 in der Längssymmetrieebene. Eine Fassung 160 für die Kugelmutter 140 ist an dem Führungsschlitten 116 angebracht. In der Fassung 160 sind Gewindebohrungen 164 vorgesehen, durch welche ein mitzunehmendes Teil befestigt werden kann.

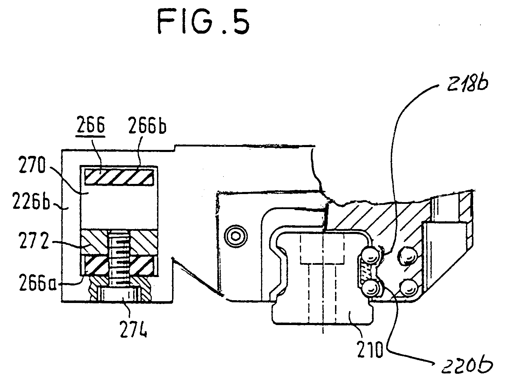

In Figur 5 sind analoge Teile mit gleichen Bezugszeichen versehen wie in den Figuren 1 bis 3, jeweils vermehrt um die Zahl 200. Bei dieser Ausführungsform ist als Antriebseinrichtung ein Riementrieb vorgesehen, der mit 266 bezeichnet ist. Der Riementrieb 266, etwa ein Zahnriementrieb, ist gebildet von einer Riemenschleife. Die Riemenschleife läuft über je eine Riemenscheibe, die an den beiden hier nicht dargestellten Traversen angebracht sind. Eine der Riemenscheiben ist dabei mit einem Antrieb versehen,mindestens eine der Riemenscheiben ist in Längsrichtung des Schienenstrangs 210 verstellbar, um den Riemen zu spannen. Die Traversen sind an dem Schienenstrang genauso angebaut, wie in Figuren 2 und 3 dargestellt. Die beiden Längsabschnitte der Riemenschleife laufen durch einen Tunnel 270 des Teils 226b. Dabei ist der eine Längsabschnitt 266a der Riemenschleife durch eine Klemmplatte 272 und einen Klemmbolzen 274 an dem Teil 226b festgeklemmt, während der andere Längsabschnitt 266b frei durch den Tunnel 270 verläuft.

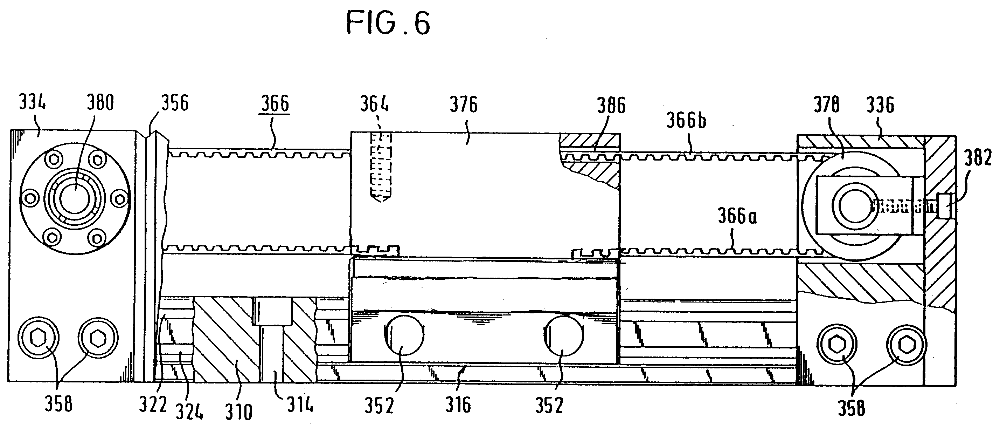

In Figur 6 sind analoge Teile mit den gleichen Bezugszeichen versehen wie in den Figuren 1 bis 3, jeweils vermehrt um die Zahl 300. Auf dem Führungsschlitten 316 ist ein Führungs- und Befestigungsklotz 376 angebracht. In den Traversen 334, 336 sind Riemenscheiben 378 durch Lager 380 gelagert. Einer dieser Riemenscheiben ist ein Schrittmotor zugeordnet. Die Riemenscheibe 378 ist durch eine Spannschraube 382 in Längsrichtung des Schienenstrangs 310 verstellbar. Ein Zahnriemen 366 läuft über die Riemenscheiben 378 und liegt in der Längssymmetrieebene des Schienenstrangs 310. Die Enden des unteren Längsabschnitts 366a des Zahnriemens 366 sind an dem Führungs- und Befestigungsklotz 376 verankert. Der obere Längsabschnitt 366b der Zahnriemenschleife 366 durchläuft einen Tunnel 386 des Führungs- und Befestigungsklotzes 376. In dem Führungs- und Befestigungsklotz sind Gewindebohrungen 364 vorgesehen, so daß auf dem Führungs- und Befestigungsklotz ein mitzunehmendes Teil befestigt werden kann.

Falls eine Pneumatikeinheit zur Anwendung kommt, so kann diese sowohl in der Einbausituation gemäß Figuren 1 und 2 als auch in der Einbausituation gemäß Figur 4 angebracht werden. Die Pneumatikeinheit selbst kann in herkömmlicher Weise von einer Zylinderkolbeneinheit gebildet sein, wobei eine Kolbenstange mit ihrem äußeren Ende an dem Führungsschlitten angreift und der Zylinder mit seinem Boden an einer der Traversen oder umgekehrt. Der Kolben ist auf beiden Seiten von einem Druckmittel beaufschlagbar. Es ist aber auch denkbar, einen durchgehenden Zylinder von Traverse zu Traverse zu verwenden, innerhalb dieses Zylinders einen kolbenstangenlosen Kolben durch beidseitige Druckmittelbeaufschlagung zu bewegen und durch den Zylinder hindurch wirksame Mitnahmemittel mechanischer oder magnetischer Art vorzusehen.

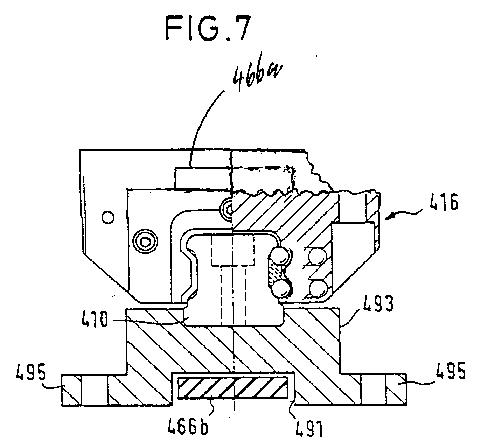

In Figur 7 ist eine Abwandlung zu Figur 6 im Querschnitt dargestellt: die Schleife ist hierbei mit den beiden Enden ihres antreibenden,oberen Trums 466a an dem Führungsschlitten 416 verankert. Das rücklaufende, untere Trum 466b der Schleife verläuft in einem Tunnel 491 einer Trägerplatte 493, auf welcher der Schienenstrang 410 befestigt ist. Die Grundplatte 493 ist mit Fußstegen 495 versehen, die auf einem Träger durch Bolzen befestigbar sind.

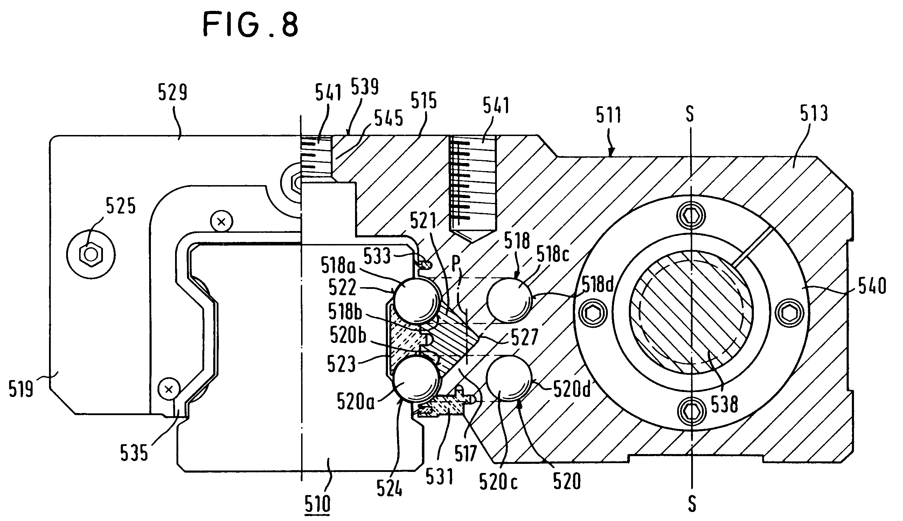

In Figur 8 ist eine erfindungsgemäße Linearführungs- und Antriebseinheit dargestellt, die Ähnlichkeit mit der Ausführungsform nach Figur 1 besitzt. Ein Führungsschlitten ist hier ganz allgemein mit 511 bezeichnet. Dieser Führungsschlitten umfasst ein Antriebselementengehäuse 513 sowie Halterungsmittel in Form eines Führungskörpers 515. Der Führungskörper 515 ist u-förmig ausgebildet und auf einem Schienenstrang 510 geführt. In den beiden Schenkeln 517 und 519 des u-förmigen Führungskörpers 515 sind je zwei Kugelumläufe 518 und 520 untergebracht, wobei nur die Kugelumläufe des rechten U-Schenkels 517 dargestellt sind. Jeder dieser Kugelumläufe 518 und 520 weist eine Tragkugelreihe 518a und 520a auf. Die Tragkugelreihen 518a,520a sind in einer schienenseitigen Kugelrollbahn 522 und 524 geführt. Die schlittenseitigen Kugelrollbahnen 518b, 520b sind in einer Stahleinlage 521 ausgebildet, welche in dem Führungskörper 515, und zwar in dessen U-Schenkel 517, um eine Schaukelachse P schaukelnd gelagert ist. Die Stahleinlage 521 ist aus Stahl, insbesondere gehärtetem Stahl hergestellt. Die Tragkugelreihen 518a und 520a werden in den schlittenseitigen Kugelrollbahnen 518b und 520b durch eine Stegeinheit 523 gesichert. Die Stegeinheit ist von zwei Halbstegen gebildet, welche in der Längsmitte des Führungskörpers 515 zusammenstoßen und dort gegeneinander zentriert sind. Diese Halbstege gehen von Endplatten aus, die an den zur Schienenachse senkrechten Endflächen des Führungskörpers 515 angebracht sind. Eine dieser Endplatten ist in der linken Hälfte der Figur 8 dargestellt und mit 529 bezeichnet. Diese Endplatten sind an dem Führungskörper 515 durch Schrauben 525 befestigt. Die Halbstege sind jeweils einstückig mit den Endplatten 529 verbunden. Wegen näherer Einzelheiten bezüglich der Endplatten und der Halbstege wird auf die DE-A-35 27 886 verwiesen. Die Stegeinheit 523 dient neben der Sicherung der Tragkugelreihen 518a und 520a in den Kugelrollbahnen 518b und 520b auch der Sicherung der Stahleinlagen 521 in einer Ausnehmung 527 des Führungskörpers 515. Längsdichtungsleisten 531,533 sowie Enddichtungselemente 535 dienen der Abdichtung der Kugelumläufe 518 und 520.

Für die rücklaufenden Kugelreihen 518c, 520c sind in dem Führungskörper 515 Rücklaufkanäle 518d, 520d gebohrt. In den Endplatten 529 sind wie in der DE-A-35 27 886 im einzelnen dargestellt, Umlenkführungen zwischen den Tragkugelreihen 518a,520a und den Rücklaufkugelreihen 518c und 520c ausgebildet.

Parallel zu dem Schienenstrang 510 läuft eine Gewindespindel 538, auf der eine Kugelmutter 540 sitzt. Die Gewindespindel 538 und die Kugelmutter 540 stehen durch eine endlose Kugelreihe miteinander in Eingriff, wie aus den deutschen Patentschriften 28 05 141, 28 34 299 und 29 14 756 bekannt.

Der Schlitten 511 ist mit dem Antriebselementengehäuse 513 und dem Führungskörper 515 einstückig aus Aluminium extrudiert. Dabei sind die wesentlichen Hohlräume in dem Antriebselementengehäuse 513 und in dem Führungskörper 515 bereits beim Extrusionsvorgang entstanden und es sind im wesentlichen nur diejenigen Flächen durch spanabhebende Nachbearbeitung entstanden, die nicht über die ganze Länge des Führungskörpers 515 geradlinig verlaufen.

Der Führungsschlitten 511 weist eine Aufspannfläche 539 auf, auf welcher ein Ansatzteil befestigt werden kann, beispielsweise mittels Schraubbolzen, die in Gewindebohrungen 541 des Führungsschlittens 511 eingeschraubt werden.

Es sei hier darauf hingewiesen, dass die Linearführungs- und Antriebseinheit auch symmetrisch in bezug auf die Achse SS ausgebildet sein könnte, indem zu beiden Seiten der Gewindespindel 538 jeweils ein Führungskörper 515 vorgesehen wird.

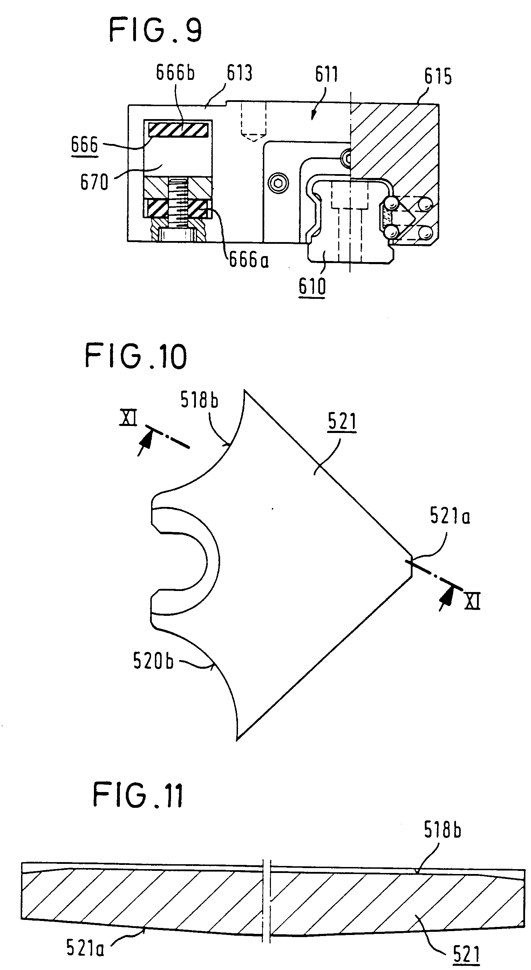

In der Ausführungsform nach Figur 9 ist der Schlitten ganz allgemein mit 611 bezeichnet. Er umfasst einen Führungskörper 615 und ein Antriebselementengehäuse 613. Für die Ausbildung des Führungskörpers 615 und der Kugelführungen gilt das in bezug auf Figur 8 Gesagte. Das Antriebselementengehäuse 613 ist hier mit einem Durchgang 670 ausgeführt, durch den die beiden Trumme 666a und 666b eines Riementriebs 666 hindurchgehen. Dabei ist das Riementrum 666a mit dem Antriebselementengehäuse 613 verklemmt, während das Riementrum 666b frei durch den Durchgang 670 hindurchläuft. Der Riementrieb 666 erstreckt sich entlang dem Schienenstrang 610 und ist an den Enden des Schienenstrangs 610 jeweils über Rollen geführt, von denen eine mit einem Antrieb versehen ist.

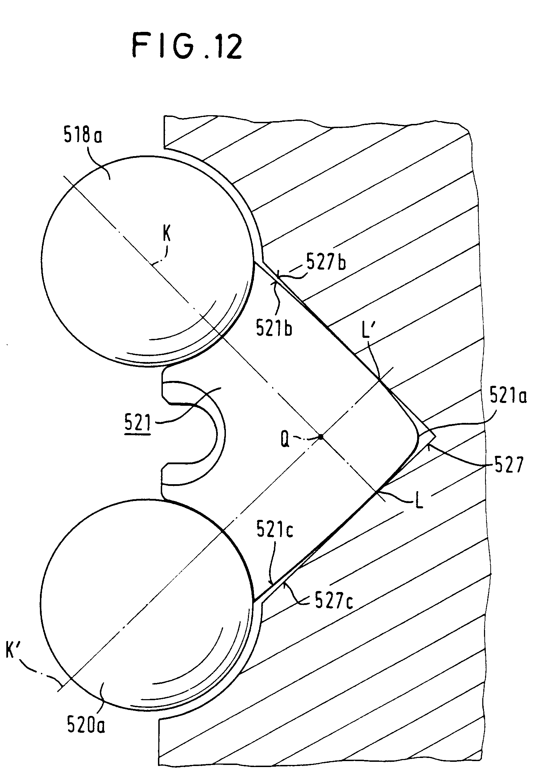

In den Figuren 10 und 11 erkennt man eine Form der Stahleinlage 521, bei welcher der Rücken 521a derart gerundet ist, dass die Stahleinlage um die Schaukelachse P schaukeln kann.

In der Ausführungsform nach Figur 12 sind überdies die Anlageflächen 521b und 521c derart konvex, dass die Stahleinlage 521 um die zur Schienenlängsrichtung parallele Achse Q schaukeln kann. Die beiden Schaukelmöglichkeiten um die Schaukelachse P gemäß Figur 8 und um die Schaukelachse Q gemäß Figur 12 können miteinander kombiniert sein. In diesem Fall entarten die Berührungslinien L und L' der Anlageflächen 521b und 521c an den Anlageflächen 527b und 527c zu Berührungspunkten.

Durch die Schaukelfähigkeit um die Schienenparallelachse Q wird jedenfalls sichergestellt, dass die Kraftübertragungsebenen K und K' der Kugelreihen 518a und 520a durch die Berührungslinien bzw. Berührungspunkte L und L' gehen.

Die erfindungsgemäße Linearführungs- und Antriebseinheit hat bei einfachem Aufbau geringen Platzbedarf. Der Führungsschlitten ist hoch belastbar; er ist drehfest, exakt und leichtgängig auf dem Schienenstrang bewegbar. Eine hohe Positioniergenauigkeit ist auch bei großer Fahrgeschwindigkeit gewährleistet. Der Aufbau erfolgt aus wenigen, wirtschaftlichen herstellbaren Teilen.

## Patentansprüche

1. Linearführungs- und Antriebseinheit umfassend eine Schienenführung mit mindestens einem Schienenstrang (510) und einen auf der Schienenführung geführten und durch einen Linearantrieb angetriebenen Führungsschlitten (511), wobei der Führungsschlitten (511) einstückig mit einem Antriebselementengehäuse (513) des Linearantriebs und mit Halterungsmitteln (515) für Rollführungsmittel (518,520) hergestellt ist und wobei die Rollführungsmittel (518,520) von lastübertragenden Tragkugelreihen (518a,520a) mindestens zweier Kugelumläufe (518,520) gebildet sind, welche Tragkugelreihen (518a,520a) mit je einer schienenführungsseitigen Kugelrollbahn (522,524) und einer schlittenseitigen Kugelrollbahn (518b,520b) in Eingriff stehen,
**dadurch gekennzeichnet,**
daß in den Halterungsmitteln (515) mindestens eine Ausnehmung (527) für die Aufnahme einer einstückigen Mehrfachstahleinlage (521) ausgebildet ist, welche Mehrfachstahleinlage (521) die schlittenseitigen Kugelrollbahnen (518b,520b) zweier Kugelumläufe (518,520) aufweist.

2. Linearführungs- und Antriebseinheit nach Anspruch 1,
**dadurch gekennzeichnet,**
dass der Führungsschlitten (511) mit dem Antriebselementengehäuse (513) und den Halterungsmitteln (515) von einem Strangpressprofil gebildet ist.

3. Linearführungs- und Antriebseinheit nach Anspruch 2,
**dadurch gekennzeichnet,**
dass das Strangpressprofil aus Aluminium gebildet ist.

4. Linearführungs- und Antriebseinheit nach einem der Ansprüche 1-3,
**dadurch gekennzeichnet,**
dass das Antriebselementengehäuse (513) eine Mutter (540) eines Gewindetriebs (538,540) aufnimmt und dass die zugehörige Gewindespindel (538) achsparallel zu dem Schienenstrang (510) in Traversen drehbar gelagert ist, welche im Bereich der Enden des Schienenstrangs (510) mit diesem verbunden sind.

5. Linearführungs- und Antriebseinheit nach Anspruch 4,
**dadurch gekennzeichnet,**
dass der Gewindetrieb (538,540) ein Kugelgewindetrieb ist, wobei die Kugelmutter (540) über in einer geschlossenen Bahn innerhalb der Kugelmutter geführte Kugeln in gewindeartigem Eingriff mit der Gewindespindel (538) steht.

6. Linearführungs- und Antriebseinheit nach einem der Ansprüche 1-3,
**dadurch gekennzeichnet,**
dass das Antriebselementengehäuse (613) mit einem Trum (666a) eines Riementriebs (666) verbunden ist, welcher sich parallel zur Längsachse des Schienenstrangs (610) zwischen zwei Traversen erstreckt, die in den Endbereichen des Schienenstrangs (610) angeordnet sind.

7. Linearführungs- und Antriebseinheit nach Anspruch 6,
**dadurch gekennzeichnet,**
dass die beiden Trumme (666a,666b) des Riementriebs (666) durch einen Durchgang (670) des Antriebselementengehäuses (613) hindurchgeführt sind, wobei das eine Trum (666a) des Riementriebs (666) innerhalb des Durchgangs (670) mit dem Antriebselementengehäuse (613) fest verbunden ist, während das andere Trum (666b) frei durch den Durchgang (670) hindurchläuft.

8. Linearführungs- und Antriebseinheit nach einem der Ansprüche 1-7,
**dadurch gekennzeichnet,**
dass die Halterungsmittel (515) den Schienenstrang (510) u-förmig umschließen und dass zwischen nach Art von U-Schenkeln einander zugeordneten Schenkeln (517,519) der Halterungsmittel (515) und den diesen Schenkeln benachbarten Seitenflächen des Schienenstrangs (510) je zwei Tragkugelreihen (518a,520a) von je zwei Kugelumläufen (518,520) angeordnet sind.

9. Linearführungs- und Antriebseinheit nach Anspruch 8,
**dadurch gekennzeichnet,**
dass das Antriebselementengehäuse (513) seitlich neben einem Schenkel (517) der Halterungsmittel (515) angeordnet ist.

10. Linearführungs- und Antriebseinheit nach Anspruch 8,
**dadurch gekennzeichnet,**
dass das Antriebselementengehäuse über einem Stegbereich der Halterungsmittel angeordnet ist.

11. Linearführungs- und Antriebseinheit nach einem der Ansprüche 1-10,
**dadurch gekennzeichnet,**
dass der Führungs-Schlitten (511) mit einer Aufspannfläche (539) und Aufspannmitteln (541) zum Aufbau eines Ansatzteils ausgebildet ist.

12. Linearführungs- und Antriebseinheit nach einem der Ansprüche 1-11,
**dadurch gekennzeichnet,**
dass die Mehrfachstahleinlagen (521) in den Halterungsmitteln (515) um eine zur Längsachse des Schienenstrangs senkrechte Achse (P) schaukelfähig gelagert sind, wobei diese Schaukelachse (P) im Bereich der Längsmitte der jeweiligen Tragkugelreihen (518a,520a) liegt.

13. Linearführungs- und Antriebseinheit nach einem der Ansprüche 1-12,
**dadurch gekennzeichnet,**
dass die einer gemeinsamen Mehrfachstahleinlage (521) zugehörigen Tragkugelreihen (518a,520a) in den zugehörigen Kugelrollbahnen (518b,520b) der gemeinsamen Mehrfachstahleinlage (521) durch eine gemeinsame Haltestegeinheit (523) gesichert sind.

14. Linearführungs- und Antriebseinheit nach Anspruch 13,
**dadurch gekennzeichnet,**
dass die Haltestegeinheit (523) Teil mindestens einer an den Halterungsmitteln befestigten Endplatte (529) ist, in welcher Umlenkführungen für die jeweiligen Kugelumläufe (518,520) ausgebildet sind.

15. Linearführungs- und Antriebseinheit nach einem der Ansprüche 1-14,
**dadurch gekennzeichnet,**
dass die Mehrfachstahleinlage (521) um eine zur Längsachse des Schienenstrangs parallele Achse schaukelfähig gelagert ist.

16. Linearführungs- und Antriebseinheit nach einem der Ansprüche 1-15,
dadurch gekennzeichnet,
daß die Ausnehmung (527) in einem zur Achse eines Schienenstrangs (510) orthogonal gelegten Querschnitt keilförmig ausgebildet ist und daß die Mehrfachstahleinlage (521) entsprechend keilförmig ausgebildet ist.

17. Linearführungs- und Antriebseinheit nach einem der Ansprüche 1-16,
dadurch gekennzeichnet,
daß an zwei beidseits einer Längssymmetrieebene eines Schienenstrangs (510) gelegenen Seitenflächen des Schienenstrangs (510) je zwei schienenstrangseitige Kugelrollbahnen (522,524) in symmetrischer Anordnung beidseits der Symmetrieebene angeordnet sind und daß dementsprechend in den Halterungsmitteln (515) Ausnehmungen (527) für je eine Mehrfachstahleinlage (521) beidseits der Symmetrieebene vorgesehen sind.

18. Linearführungs- und Antriebseinheit nach einem der Ansprüche 1-17,
dadurch gekennzeichnet,
daß die schienenstrangseitigen Kugelrollbahnen (522,524) von den Flanken einer Längsnut in einer Seitenfläche des Schienenstrangs (510) gebildet sind.

19. Linearführungs und Antriebseinheit, nach einem der Ansprüche 1-18, dadurch gekennzeichnet, daß die Schienenführung einen einzigen Schienenstrang (10) mit einer Längsachse (A) und einer diese Längsachse (A) enthaltenden Längssymmetrieebene (S-S) umfaßt, daß auf dem Schienenstrang (10) ein Führungsschlitten (16) symmetrisch zur Längssymmetrieebene (S-S) angeordnet und durch zur Längssymmetrieebene (S-S) symmetrische Rollführungsmittel (18, 20) geführt ist, daß an den Enden des Schienenstrangs (10) Traversen (34,36) angeordnet sind und daß eine einzige zwischen den Traversen (34, 36) sich erstreckende Antriebseinrichtung (38, 40) mit einem parallel zur Richtung der Längsachse (A) beweglichen Antriebselement (40) vorgesehen ist, welches außerhalb der Längsachse (A) in Mitnahmeverbindung mit dem Führungsschlitten steht,
wobei der Schienenstrang (10) beidseits der Längssymmetrieebene (S-S) mit je zwei in einer Richtung senkrecht zur Längsachse (A) und parallel zur Längssymmetrieebene (S-S) beabstandeten Kugelrollbahnen (22,24) für jeweils eine Tragkugelreihe (18a, 20a) von je zwei beidseits der Längssymmetrieebene (S-S) angeordneten Kugelumläufen (18, 20) des Führungsschlittens (16) ausgeführt ist und wobei die den Tragkugelreihen (18a, 20a) auf einer Seite der Symmetrieebene (S-S) zugeordneten Kraftübertragungsebenen (K1, K2) zu der Längssymmetrieebene (S-S) hin divergierend mit der Längssymmetrieebene (S-S) jeweils einen Winkel α von 30° bis 60°, vorzugsweise ca. 45°, einschließen.

20. Linearführungs- und Antriebseinheit nach Anspruch 19,
dadurch gekennzeichnet,
daß der Führungsschlitten (16) in einem zur Längsachse (A) senkrechten Querschnitt betrachtet in im wesentlichen U-förmiger Zuordnung mit einem Stegteil (16c) und zwei Schenkelteilen (16a, 16b) ausgeführt ist, wobei an den Schenkelteilen (16a, 16b) jeweils zwei Kugelumläufe (18, 20) angeordnet sind.

21. Linearführungs- und Antriebseinheit nach Anspruch 20,
dadurch gekennzeichnet,
daß die Antriebseinrichtung (38, 40) in Abstand von der Längssymmetrieebene (S-S) seitlich eines Schenkelteils (16b) des Führungsschlittens (16a) angeordnet ist.

22. Linearführungs- und Antriebseinheit nach Anspruch 21,
dadurch gekennzeichnet,
daß sich zwischen den beiden Traversen ein Pneumatikantrieb erstreckt.

23. Linearführungs- und Antriebseinheit nach Anspruch 20,
dadurch gekennzeichnet,
daß die Antriebseinrichtung (138, 140) im Bereich der Längssymmetrieebene über dem Stegteil (116c) des Führungsschlittens (116) angeordnet ist.

24. Linearführungs- und Antriebseinheit nach Anspruch 23,
dadurch gekennzeichnet,
daß sich zwischen den beiden Traversen (134, 136) eine drehbare Gewindespindel (138) erstreckt und daß auf dem Stegteil (116c) des Führungsschlittens (116) eine Fassung (160) für eine Kugelmutter (140) angebracht ist, welche über in einer geschlossenen Bahn innerhalb der Kugelmutter (140) geführte Kugeln in gewindeartigem Eingriff mit der Gewindespindel (138) steht.

25. Linearführungs- und Antriebseinheit nach Anspruch 24,
dadurch gekennzeichnet,
daß die Kugelmutter (140) in einer Einsenkung (142) einer zur Längsachse normalen Endfläche (144) der Fassung (160) eingelassen ist.

26. Linearführungs- und Antriebseinheit nach Anspruch 23,
dadurch gekennzeichnet,
daß sich zwischen den beiden Traversen (334, 336) eine Schleife (366) eines flexiblen Antriebsmittels in Form einer Kette eines Zahnriemens oder dgl. erstreckt und daß ein Trum (366a) dieser Schleife (366) mit dem Stegteil (316c) des Führungsschlittens (316) verbunden ist.

27. Linearführungs- und Antriebseinheit nach Anspruch 26,
dadurch gekennzeichnet,
daß auf dem Stegteil (316c) des Führungsschlittens (316) ein Führungs- und Befestigungsklotz (376) für die Schleife (366) angeordnet ist, welcher eine Klemmfläche zum Festlegen des einen Schleifentrums (366a) an dem Stegteil (316c) und einen Tunnel (386) für den Durchgang des anderen Schleifentrums (366b) aufweist.

28. Linearführungs- und Antriebseinheit nach Anspruch 26,
dadurch gekennzeichnet,
daß das obere, treibende Trum (466a) der Schleife auf dem Steg (416c) des Führungsschlittens (416) vermittels einer Klemmplatte (476) oder dgl. befestigt ist und daß das rücklaufende, untere Trum (466b) der Schleife unterhalb des Schienenstrangs (410) zurückgeführt ist, beispielsweise in einem Tunnel (491) einer den Schienenstrang (410) tragenden Grunplatte (493).

29. Linearführungs- und Antriebseinheit nach einem der Ansprüche 21 bis 28,
dadurch gekennzeichnet,
daß auf der Fassung (160) bzw. auf dem Führungs- und Befestigungsklotz (376)bzw. auf der Klemmplatte (476) Befestigungsmittel zur Verbindung mit einem anzutreibenden Teil angebracht sind.

30. Linearführungs- und Antriebseinheit nach Anspruch 29,
dadurch gekennzeichnet,
daß die Befestigungsmittel Paßflächen (50) zur formschlüssigen, justierenden Anlage des anzutreibenden Teils aufweisen.

31. Linearführungs- und Antriebseinheit nach einem der Ansprüche 19 bis 30,
dadurch gekennzeichnet,
daß die Endtraversen (34, 36) auf Endabschnitten der Kugelrollbahnen (22, 24) des Schienenstrangs (10) justiert sind.

32. Linearführungs- und Antriebseinheit nach Anspruch 31,
dadurch gekennzeichnet,
daß die Endtraversen (34, 36) auf dem Schienenstrang (10) vermittels den Schienenstrang (10) durchsetzender Befestigungsschrauben befestigt sind.

33. Linearführungs- und Antriebseinheit nach einem der Ansprüche 19 bis 32,
dadurch gekennzeichnet,
daß der Schienenstrang (10) eine Auflagefläche (12) zur Auflage auf einem Träger und senkrecht zu dieser Auflagefläche verlaufende Befestigungsbohrungen (14) zur Aufnahme von den Schienenstrang (10) auf dem Träger haltenden Befestigungsbolzen aufweist.

34. Linearführungs- und Antriebseinheit nach Anspruch 33,
dadurch gekennzeichnet,
daß die Endtraversen (34, 36) und/oder der Führungsschlitten (16) gegenüber der Auflagefläche (12) zurückgesetzt sind.

## Claims

1. Linear guiding and driving unit comprising a rail guide with at least one rail track (510) and a guiding carriage (511) guided on the rail guide and driven by a linear drive, whereby the guiding carriage (511) is manufactured in one piece with a drive element casing (513) of the linear drive and with holding means (515) for rolling guide means (518,520), and whereby the rolling guide means (518,520) are formed by load-transferring rows of supporting balls (518a, 520a) of at least two ball circuits (518, 520) which rows of supporting balls (518a, 520a) are in engagement with at least one rail guiding-side ball rolling track (522, 524) and one carriage-side ball rolling track (518b, 520b),
characterised in that
in the holding means (515) at least one recess (527) is formed for seating a one-piece multi-steel insert (521), which multi-steel insert (521) comprises the carriage-side ball rolling tracks (518b, 520b) of two ball circuits (518, 520).

2. Linear guiding and driving unit according to Claim 1,
characterised in that
the guide carriage (511) together with the drive element casing (513) and the holding means (515) is formed of an extruded profile.

3. Linear guiding and driving unit according to claim 2,
characterised in that
the extruded profile is of aluminium.

4. Linear guiding and driving unit according to one of Claims 1-3,
characterised in that
the drive element casing (513) seats a nut (540) of a threaded drive (538, 540) and in that the associated threaded spindle (538) is rotatably mounted parallel with its axis to the rail track (510) in cross-bars which are connected to the rail track (510) in the region of its ends.

5. Linear guiding and driving unit according to Claim 4,
characterised in that
the threaded drive (538, 540) is a ball threaded drive, the ball nut (540) being in thread-like engagement with the threaded spindle (538) by balls guided in a closed track inside the ball nut.

6. Linear guiding and driving unit according to one of claims 1-3,
characterised in that
the drive element casing (613) is connected with one side (666a) of a belt drive (666), which extends parallel to the longitudinal axis of the rail track (610) between two cross-members, which are disposed in the end regions of the rail track (610).

7. Linear guiding and driving unit according to Claim 6,
characterised in that
the two sides (666a, 666b) of the belt drive (666) are conducted through a passage (670) of the drive element casing (613), the one side (666a) of the belt drive (666) being firmly connected, inside the passage (670), with the drive element casing (613), while the other side (666b) passes freely through the passage (670).

8. Linear guiding and driving unit according to one of Claims 1-7,
characterised in that
the holding means (515) fit in U-shape around the rail track (510) and in that between flanges (517, 519) of the holding means (515) assigned to one another like U-shaped flanges and the lateral surfaces of the rail track (510) adjacent to these flanges, two rows (518a, 520a) of supporting balls of two ball circuits (518, 520) are disposed.

9. Linear guiding and driving unit according to claim 8,
characterised in that
the drive element casing (513) is disposed laterally alongside one flange (517) of the holding means (515).

10. Linear guiding and driving unit according to claim 8,
characterised in that
the drive element casing is disposed above the web region of the holding means.

11. Linear guiding and driving unit according to one of claims 1-10,
characterised in that
the guiding carriage (511) is constructed with a clamping surface (539) and clamping means (541) for the adding-on of an extension piece.

12. Linear guiding and driving unit according to one of claims 1 to 11,
characterised in that
the multi-steel inserts (521) are mounted capable of rocking in the holding means (515) about an axis (P) perpendicular to the longitudinal axis of the rail track, this rocking axis (P) lying in the region of the longitudinal centre of the relevant rows of supporting balls (518a, 520a).

13. Linear guiding and driving unit according to one of claims 1-12,
characterised in that
the rows of supporting balls (518a, 520a) belonging to one common multi-steel insert (521) are secured in the associated ball rolling tracks (518b, 520b) of the common multi-steel insert (521) by a common holding bar unit (523).

14. Linear guiding and driving unit according to Claim 13,
characterised in that
the holding bar unit (523) is a part of at least one end plate (529) fixed to the holding means, in which end plate change-direction guides for the associated ball circuits (518, 520) are formed.

15. Linear guiding and driving unit according to one of claims 1-14
characterised in that
the multi-steel insert (521) is mounted capable of rocking about an axis parallel to the longitudinal axis of the rail track.

16. Linear guiding and driving unit according to one of Claims 1-15,
characterised in that,
the recess (527) is formed in a wedge-shape in a cross cut orthogonal to the axis of a rail track (510) and in that the multi-steel insert (521) is correspondingly formed in a wedge shape.

17. Linear guiding and driving unit according to one of Claims 1-16,
characterised in that
on two lateral surfaces of the rail track (510) on both sides of a longitudinal plane of symmetry of one rail track (510) two rail track-side ball rolling tracks (522, 524) are arranged symmetrically on both sides of the plane of symmetry and in that in the holding means (515) recesses (527) are provided accordingly for each multi-steel insert (521) on both sides of the symmetrical plane.

18. Linear guiding and driving unit according to one of Claims 1-17,
characterised in that
the rail track side ball rolling tracks (522, 524) are formed by the sides of a longitudinal groove in a lateral surface of the rail track (510).

19. Linear guiding and driving unit according to one of claims 1-18,
characterised in that
the rail guide comprises a single rail track (10) having a longitudinal axis (A) and a longitudinal plane of symmetry (S-S) containing this longitudinal axis (A), in that a guide carriage (16) is disposed on the rail track (10) symmetrically about the longitudinal plane of symmetry (S-S) and guided by roller guide means (18, 20) symmetrical about the longitudinal plane of symmetry (S-S), in that cross-members (34, 36) are disposed at the ends of the rail track (10) and in that a single driving device (38, 40) extending between the cross-members (34, 36) and comprising a drive element (40) movable parallel to the direction of the longitudinal axis (A) is provided, which drive element is drivingly connected with the guide carriage outside the longitudinal axis (A), wherein the rail track (10) is constructed on each side of the longitudinal plane of symmetry (S-S) with two ball rolling tracks (22, 24) spaced apart in a direction perpendicular to the longitudinal axis (A) and parallel to the longitudinal plane f symmetry (S-S), each ball rolling track associated with one row of supporting balls (18a, 20a) of two ball circuits (18, 20) of the guide carriage (16), each disposed on each side of the longitudinal plane of symmetry (S-S) and whereby the force transmission planes (K1, K2) associated with the rows of supporting balls (18a, 20a) on one side of the plane of symmetry (S-S) diverging towards the longitudinal plane of symmetry (S-S) each at an angle α of 30° to 60°, preferably approximately 45°, to the longitudinal plane of symmetry (S-S).

20. Linear guiding and driving unit according to Claim 19,
characterised in that
the guide carriage (16), as viewed in a cross-section perpendicular to the longitudinal axis (A), is constructed of substantially U-shape with a web part (16c) and two flange parts (16a, 16b), two ball circuits (18, 20) being disposed on each of the flange parts (16a, 16b).

21. Linear guiding and driving unit according to Claim 20
characterised in that
the drive device (38, 40) is disposed at a distance from the longitudinal plane of symmetry (S-S) laterally of one flange part (16b) of the guide carriage (16a).

22. Linear guiding and driving unit according to Claim 21,
characterised in that
a pneumatic drive extends between the two cross-members.

23. Linear guiding and driving unit according to Claim 20,
characterised in that
the drive device (138, 140) is disposed in the region of the longitudinal plane of symmetry above the web part (116c) of the guide carriage (116).

24. Linear guiding and driving unit according to Claim 23,
characterised in that
a rotatable threaded spindle (138) extends between the two cross-members (134, 136), and in that a seating (160) for a ball nut (140) is mounted on the web part (116c) of the guided carriage (116), which ball nut is in thread-like engagement with the threaded spindle (138) by balls guided in a closed track inside the ball nut (140).

25. Linear guiding and driving unit according to Claim 24,
characterised in that
the ball nut (140) is inset in a recess (142) of an end surface (144) of the seating (160) normal to the longitudinal axis.

26. Linear guiding and driving unit according to Claim 23,
characterised in that
a loop (366) of a flexible drive means in the form of a chain, a toothed belt or the like extends between the two cross-members (334, 336), and that one side (366a) of this loop (366) is connected with the web part (316c) of the guide carriage (316).

27. Linear guiding and driving unit according to Claim 26,
characterised in that
a guiding and fixing block (376) for the loop (366) is disposed on the web part (316c) of the guide carriage (316), which guiding and fixing block comprises a clamping surface for securing the one loop side (366a) to the web part (316c) and a tunnel (386) for the passage of the other loop side (366b).

28. Linear guiding and driving unit according to Claim 26,
characterised in that
the upper, driving side (466a) of the loop is fixed to the web (416c) of the guide carriage (416) by means of a clamping plate (476) or the like, and the return, lower side (466b) of the loop is guided back underneath the rail track (410), for example in a tunnel (491) of a baseplate (493) carrying the rail track (410).

29. Linear guiding and driving unit according to one of Claims 21 to 28,
characterised in that
fixing means for connection with a part to be driven are mounted on the seating (160) or on the guiding and fixing block (376) or on the clamping plate (476), as the case may be.

30. Linear guiding and driving unit according to claim 29,
characterised in that
the fixing means comprise fitting surfaces (50) for the form-fitting located bearing of the part to be driven.

31. Linear guiding and driving unit according to one of clams 19 to 30,
characterised in that
the end cross-members (34, 36) are adjusted on end sections of the ball rolling tracks (22, 24) of the rail track (10).

32. Linear guiding and driving unit according to Claim 31,
characterised in that
the end cross-members (34, 36) are fixed to the rail track (10) by means of fixing screws passing through the rail track (10).

33. Linear guiding and driving unit according to one of Claims 19 to 32
characterised in that
the rail track (10) possesses a seating surface (12) for seating on a beam and fixing bores (14) passing perpendicularly to this seating surface for receiving fixing bolts holding the rail track (10) on the beam.

34. Linear guiding and driving unit according to Claim 20,
characterised in that
the end cross-members (34, 36) and/or the guide carriage (16) are set back with respect to the seating surface (12).

## Revendications

1. Unité de guidage et d'entraînement linéaire comprenant un système de guidage sur rails pourvu d'au moins une voie (510) et un chariot de guidage (511) guidé sur le système de guidage sur rails et entraîné par un entraînement linéaire, le chariot de guidage (511) étant réalisé pour ne former qu'une seule pièce avec un boîtier d'éléments d'entraînement (513) de l'entraînement linéaire et avec des moyens de maintien (515) destinés à des moyens de guidage roulants (518, 520) et les moyens de guidage roulants (518, 520) étant constitués de séries de billes porteuses (518a, 520a) transmettant la charge d'au moins deux circuits de billes (518, 520), les séries de billes porteuses (518a, 520a) coopérant, chacune, avec une surface de roulement des billes (522, 524) située du côté du système de guidage sur rails et avec une surface de roulement des billes (518b, 520b) située du côté du chariot,
caractérisée en ce qu'est ménagé, dans les moyens de maintien (515), au moins un évidement (527) destiné à loger un insert en acier multiple (521) monobloc, insert en acier multiple (521) qui comporte les surfaces de roulement des billes (518b, 520b), situées du côté du chariot, de deux circuits de billes (518, 520).

2. Unité de guidage et d'entraînement linéaire selon la revendication 1, caractérisée en ce que le chariot de guidage (511), avec le boîtier d'éléments d'entraînement (513) et les moyens de maintien (515), est formé par un profilé extrudé.

3. Unité de guidage et d'entraînement linéaire selon la revendication 2, caractérisée en ce que le profilé extrudé est constitué en aluminium.

4. Unité de guidage et d'entraînement linéaire selon l'une des revendications 1 à 3, caractérisée en ce que le boîtier d'éléments d'entraînement (513) loge un écrou (540) d'un entraînement par vis (538, 540) et en ce que la tige filetée (538) associée est montée, selon un axe parallèle à la voie (510), de façon tournante dans des traverses, qui sont reliées dans la zone des extrémités de la voie (510) avec celle-ci.

5. Unité de guidage et d'entraînement linéaire selon la revendication 4, caractérisée en ce que l'entraînement par vis (538, 540) est un entraînement par vis à billes, l'écrou sphérique (540) se trouvant en liaison du type fileté avec la tige filetée (538), par l'intermédiaire de billes guidées selon un circuit fermé à l'intérieur de l'écrou sphérique.

6. Unité de guidage et d'entraînement linéaire selon l'une des revendications 1 à 3, caractérisée en ce que le boîtier d'éléments d'entraînement (613) est relié à un brin (666a) d'un entraînement à courroie (666), qui s'étend, parallèlement à l'axe longitudinal de la voie (610), entre deux traverses qui sont situées dans les zones terminales de la voie (610).

7. Unité de guidage et d'entraînement linéaire selon la revendication 6, caractérisée en ce que les deux brins (666a, 666b) de l'entraînement à courroie (666) passent à travers un passage (670) du boîtier d'éléments d'entraînement (613), l'un (666a) des brins de l'entraînement à courroie étant relié fixement avec le boîtier d'éléments d'entraînement (613), à l'intérieur du passage (670), tandis que l'autre brin (666b) passe librement à travers le passage (670).

8. Unité de guidage et d'entraînement linéaire selon l'une des revendications 1 à 7, caractérisée en ce que les moyens de maintien (515) entourent la voie (510) selon une forme de U et en ce qu'entre des branches (517, 519), associées l'une à l'autre de façon similaire à des branches de U, des moyens de maintien (515) et les surfaces latérales, adjacentes à ces branches, de la voie (510), sont disposées respectivement deux séries de billes porteuses (518a, 520a) appartenant respectivement à deux circuits de billes (518, 520).

9. Unité de guidage et d'entraînement linéaire selon la revendication 8, caractérisée en ce que le boîtier d'éléments d'entraînement (513) est disposé latéralement à côté d'une branche (517) des moyens de maintien (515).

10. Unité de guidage et d'entraînement linéaire selon la revendication 8, caractérisée en ce que le boîtier d'éléments d'entraînement est disposé sur une zone formant âme des moyens de maintien.

11. Unité de guidage et d'entraînement linéaire selon l'une des revendications 1 à 10, caractérisée en ce que le chariot de guidage (511) présente une surface de bridage (539) et des moyens de fixation (541) pour le montage d'une pièce rapportée.

12. Unité de guidage et d'entraînement linéaire selon l'une des revendications 1 à 11, caractérisée en ce que les inserts en acier multiples (521) sont montés dans les moyens de maintien (515) de façon à pouvoir basculer autour d'un axe (P) perpendiculaire à l'axe longitudinal de la voie, cet axe de basculement (P) étant situé dans la zone du milieu de la longueur des séries de billes porteuses (518a, 520a) associées.

13. Unité de guidage et d'entraînement linéaire selon l'une des revendications 1 à 12, caractérisée en ce que les séries de billes porteuses (518a, 520a) associées à un insert en acier multiple (521) commun sont maintenues dans les surfaces de roulement des billes (518b, 520b) associées de l'insert en acier multiple (521) commun par une unité formant barrette de maintien (523) commune.

14. Unité de guidage et d'entraînement linéaire selon la revendication 13, caractérisée en ce que l'unité formant barrette de maintien (523) fait partie d'au moins une plaque terminale (529), fixée sur les moyens de maintien, dans laquelle sont prévus des guidages de renvoi destinés à chaque circuit de billes (518, 520).

15. Unité de guidage et d'entraînement linéaire selon l'une des revendications 1 à 14, caractérisée en ce que l'insert en acier multiple (521) est monté de façon à pouvoir basculer autour d'un axe parallèle à l'axe longitudinal de la voie.

16. Unité de guidage et d'entraînement linéaire selon l'une des revendications 1 à 15, caractérisée en ce que l'évidement (527), vu en section transversale orthogonale par rapport à l'axe d'une voie (510), présente une forme de coin et en ce que l'insert en acier multiple (521) présente, de façon correspondante, une forme de coin.

17. Unité de guidage et d'entraînement linéaire selon l'une des revendications 1 à 16, caractérisée en ce que, sur deux surfaces latérales de la voie (510) situées de part et d'autre d'un plan de symétrie longitudinal d'une voie (510), sont placées respectivement deux surfaces de roulement des billes (522, 524) situées du côté de la voie, disposées de façon symétrique de part et d'autre du plan de symétrie, et en ce que sont prévus, de façon correspondante, des évidements (527) ménagés dans les moyens de maintien (515), destinés chacun à un insert en acier multiple (521) de part et d'autre du plan de symétrie.

18. Unité de guidage et d'entraînement linéaire selon l'une des revendications 1 à 17, caractérisée en ce que les surfaces de roulement des billes (522, 524) situées du côté de la voie sont formées par les flancs d'une rainure longitudinale ménagée dans une surface latérale de la voie (510).

19. Unité de guidage et d'entraînement linéaire selon l'une des revendications 1 à 18, caractérisée en ce que le système de guidage sur rails comprend une seule voie (10) avec un axe longitudinal (A) et un plan de symétrie longitudinale (S-S) contenant cet axe longitudinal (A), en ce que, sur la voie (10), un chariot de guidage (16) est disposé de façon symétrique par rapport au plan de symétrie longitudinale (S-S) et est guidé par des moyens de guidage roulants (18, 20) symétriques par rapport au plan de symétrie longitudinale (S-S), en ce que des traverses (34, 36) sont disposées aux extrémités de la voie (10), et en ce qu'est prévu un seul dispositif d'entraînement (38, 40) s'étendant entre les traverses (34, 36), avec un élément d'entraînement (40) mobile parallèlement à la direction de l'axe longitudinal (A), qui se trouve, en-dehors de l'axe longitudinal (A), en liaison d'entraînement avec le chariot de guidage,
la voie (10), de part et d'autre du plan de symétrie longitudinale (S-S), étant réalisée avec respectivement deux surfaces de roulement des billes (22, 24) espacées dans une direction perpendiculaire à l'axe longitudinal (A) et parallèle au plan de symétrie longitudinale (S-S), destinées chacune à une série de billes porteuses (18a, 20a) appartenant respectivement à deux circuits de billes (18, 20), disposés de part et d'autre du plan de symétrie longitudinal (S-S), du chariot de guidage (16), et les plans de transmission des forces (K1, K2) associés aux séries de billes porteuses (18a, 20a) d'un côté du plan de symétrie (S-S) formant chacun, avec le plan de symétrie longitudinale (S-S), un angle α de 30° à 60°, de préférence d'environ 45°, divergent par rapport du plan de symétrie longitudinale (S-S).

20. Unité de guidage et d'entraînement linéaire selon la revendication 19, caractérisée en ce que le chariot de guidage (16), vu en section transversale perpendiculaire à l'axe longitudinal (A), est réalisé, selon une configuration sensiblement en forme de U, avec une partie formant âme (16c) et deux parties formant branches (16a, 16b), deux circuits de billes (18, 20) étant disposés respectivement sur les parties formant branches (16a, 16b).

21. Unité de guidage et d'entraînement linéaire selon la revendication 20, caractérisée en ce que le dispositif d'entraînement (38, 40) est placé à distance du plan de symétrie longitudinale (S-S), sur le côté d'une partie formant branche (16b) du chariot de guidage (16a).

22. Unité de guidage et d'entraînement linéaire selon la revendication 21, caractérisée en ce qu'un entraînement pneumatique s'étend entre les deux traverses.

23. Unité de guidage et d'entraînement linéaire selon la revendication 20, caractérisée en ce que le dispositif d'entraînement (138, 140) est disposé, dans la zone du plan de symétrie longitudinale, au-dessus de la partie formant âme (116c) du chariot de guidage (116).

24. Unité de guidage et d'entraînement linéaire selon la revendication 23, caractérisée en ce que s'étend, entre les deux traverses (134, 136), une tige filetée (138) rotative et en ce qu'est disposée, sur la partie formant âme (116c) du chariot de guidage (116), une monture (160) destinée à un écrou sphérique (140), qui se trouve en liaison du type fileté avec la tige filetée (138), par l'intermédiaire de billes guidées dans un circuit fermé à l'intérieur de l'écrou sphérique (140).

25. Unité de guidage et d'entraînement linéaire selon la revendication 24, caractérisée en ce que l'écrou sphérique (140) est encastré dans un évidement (142) d'une surface terminale (144), perpendiculaire à l'axe longitudinal, de la monture (160).

26. Unité de guidage et d'entraînement linéaire selon la revendication 23, caractérisée en ce que s'étend, entre les deux traverses (334, 336), une boucle (366) d'un moyen d'entraînement flexible se présentant sous la forme d'une chaîne d'une courroie crantée ou similaire, et en ce qu'un brin (366a) de cette boucle est relié à la partie formant âme (316c) du chariot de guidage (316).

27. Unité de guidage et d'entraînement linéaire selon la revendication 26, caractérisée en ce qu'est disposé, sur la partie formant âme (316c) du chariot de guidage (316), un bloc de guidage et de fixation (376) destiné à la boucle (366), qui présente une surface de serrage destinée à la fixation de l'un des brins de la bouche (366a) sur la partie formant âme (316c), et un tunnel (386) destiné au passage de l'autre brin de boucle (366b).

28. Unité de guidage et d'entraînement linéaire selon la revendication 26, caractérisée en ce que le brin supérieur (466a) de la bouche, qui effectue l'entraînement, est fixé sur l'âme (416c) du chariot de guidage (416) au moyen d'une plaque de serrage (476) ou similaire, et en ce que le brin inférieur (466b) de la bouche, qui effectue le retour, est guidé en retour sous la voie (410), par exemple dans un tunnel (491) d'une plaque de base (493) portant la voie (410).

29. Unité de guidage et d'entraînement linéaire selon l'une des revendications 21 à 28, caractérisée en ce que des moyens de fixation destinés à la liaison avec une partie à entraîner sont placés sur la monture (160) et/ou sur le bloc de guidage et de fixation (376) et/ou sur la plaque de serrage (476).

30. Unité de guidage et d'entraînement linéaire selon la revendication 29, caractérisée en ce que les moyens de fixation présentent des surfaces de contact (50) destinées à un contact ajusté, par complémentarité de formes, avec la partie à entraîner.

31. Unité de guidage et d'entraînement linéaire selon l'une des revendications 19 à 30, caractérisée en ce que les traverses terminales (34, 36) sont ajustées sur des parties terminales des surfaces de roulement des billes (22, 24) de la voie (10).

32. Unité de guidage et d'entraînement linéaire selon la revendication 31, caractérisée en ce que les traverses terminales (34, 36) sont fixées sur la voie (10) au moyen de vis de fixation traversant la voie (10).

33. Unité de guidage et d'entraînement linéaire selon l'une des revendications 19 à 32, caractérisée en ce que la voie (10) présente une surface d'appui (12) destinée à l'appui sur un support, et des perçages de fixation (14), s'étendant perpendiculairement à cette surface d'appui, destinés à loger des boulons de fixation maintenant la voie (10) sur le support.

34. Unité de guidage et d'entraînement linéaire selon la revendication 33, caractérisée en ce que les traverses terminales (34, 36) et/ou le chariot de guidage sont en retrait par rapport à la surface d'appui (12).
